# EUROPÄISCHE PATENTSCHRIFT

(11) **EP 1 585 648 B1**
(45) Veröffentlichungstag und Bekanntmachung des Hinweises auf die Patenterteilung: **19.09.2007**
(21) Anmeldenummer: 03769491.6
(22) Anmeldetag: 03.11.2003
(51) Int. Cl.: B60Q 1/26, B60Q 1/44, F21S 8/10

(54) **FAHRZEUGLEUCHTE UND VERFAHREN ZUR ANZEIGE UNTERSCHIEDLICHER SIGNALBILDER EINER FAHRZEUGLEUCHTE**
AUTOMOTIVE LIGHT AND METHOD FOR INDICATING DIFFERENT SIGNAL PATTERNS OF AN AUTOMOTIVE LIGHT
PHARE DE VEHICULE ET PROCEDE D'AFFICHAGE DE DIVERSES IMAGES DE SIGNAL D'UN PHARE DE VEHICULE

(30) Priorität: 23.01.2003 DE 10302460
(43) Veröffentlichungstag der Anmeldung: 19.10.2005
(73) Patentinhaber: Bayerische Motoren Werke Aktiengesellschaft, 80809 München (DE)
(72) Erfinder: BEFELEIN, Carsten, 85540 Haar (DE)
(86) Internationale Anmeldenummer: PCT/EP2003/012450
(87) Internationale Veröffentlichungsnummer: WO 2004/065172

(56) Entgegenhaltungen:
- EP-A- 0 942 225
- EP-A- 1 213 531
- US-A- 6 133 852
- US-A1- 2002 075 148

## Beschreibung

Die Erfindung betrifft eine Fahrzeugleuchte, bei der ein Reflektor mit mindestens einer dem Reflektor zugeordneten ersten Lichtquelle ein erstes Lichtsystem bildet, dessen Lichtstrom auf eine lichtdurchlässige Abdeckscheibe leitbar ist, und mit einer der Lichtquelle zur Abdeckscheibe hin vorgelagerten Abschirmeinrichtung.

Die Erfindung betrifft weiterhin ein Verfahren zur Anzeige unterschiedlicher Signalbilder einer Fahrzeugleuchte.

Das Signalbild herkömmlicher Fahrzeugleuchten erscheint entweder flächig, wenn eine Abdeckscheibe der Leuchte durchgängig als Optik ausgebildet ist oder, wie in modernen Leuchten zunehmend durch optiklose, klare Abdeckscheiben realisiert, räumlich. Durch eine große Bautiefe kann das räumliche Erscheinungsbild noch verstärkt werden. Die klaren Abdeckscheiben geben den Einblick in das Leuchteninnere frei, so dass die technischen Details der Reflektoren und Lichtquellen erkennbar sind. Da insbesondere der Einblick auf eine in der Reflektoröffnung sitzende Lampe als störend empfunden wird, ist es üblich, die Lichtquellen mit Abschirmungen zu kaschieren. Dabei wird angestrebt, unter Beachtung der lichttechnischen Vorschriften, die Abschirmungen in ein möglichst individuelles, markantes Leuchtendesign einzubinden.

Gleichzeitig soll die Leuchte eine hohe Funktionalität besitzen. Insbesondere bei Heckleuchten kommen erhöhten Sicherheitsanforderungen bei der Signalwirkung von Schlusslicht und Bremslicht durch die kürzeren Bremswege aufgrund der Ausstattung der Kraftfahrzeuge mit Bremshilfesystemen, beispielsweise Antiblockiersystemen (ABS), zunehmende Bedeutung zu. Dazu ist es beispielsweise aus der DE 196 24 046 A1 und der DE 197 31 712 A1 bekannt, an den Heckleuchten Bremsstärkeanzeigen zu realisieren, die abhängig von der Bremsstärke unterschiedliche Signale, bzw. Signalbilder abgeben. Diese Bremsstärkeanzeigen werden jedoch nur durch eine Lichtstärkeanhebung oder durch Zuschalten weiterer Leuchten in linearer Formation nebeneinander realisiert und können keine räumlichen Signalbilder erzeugen.

Aus der DE 198 20 656 A1 ist eine Fahrzeugleuchte bekannt, bei der einer Lichtquelle eine Abschirmeinrichtung vorgelagert ist. Die Lichtquelle ist in einem Leuchtengehäuse im Brennpunkt eines Reflektors angeordnet, so dass der Lichtstrom auf eine, das Leuchtengehäuse abdeckende, Abschlussscheibe gerichtet ist. Das durch den Reflektor und die Lichtquelle gebildete Lichtsystem ist Teil einer Mehrkammerleuchte. Dabei sind mehrere Lichtsysteme vorgesehen, wobei eines als kombinierte Schluss- und Bremsleuchte ausgebildet ist. Die Abschirmeinrichtung wird von einem schalenförmigen kreisrunden Rückstrahler gebildet. Dieser ist in einer Zwischenscheibe, der Abschlussscheibe zugewandt, angeordnet. Der Reflektor ist durch, zu dem Rückstrahler benachbart liegende, klare kreisförmige Bereiche der Abschlussscheibe und der Zwischenscheibe zu sehen, die Lichtquelle selbst ist hingegen durch den Rückstrahler abgedeckt.

Dokument EP-A-1 213 531 offenbart eine Fanhrzeugleuchte mit einem ersten und einem zweiten Lichtsystem, wobei das zweite Lichtsystem als Abschirmeinrichtung für das erste Lichtsystem ausgebildet ist. Die beiden Lichtsysteme sind als Kombination von verschiedenen Lichtfunktionen ausgelegt: Rückfahrtlicht mit Bremslicht, Rückfahrtlicht mit Blinklicht, Blinklicht mit Schlusslicht und Blinklicht mit Bremslicht.

Aus Dokument US-A-6 133 852 ist eine Fahrzeugleuchte mit mehreren Lichtsystemen bekannt bei der die Lichtsysteme mit unterschiedlichen Lichtstärken einstellbar sind.

Nachteilig bei der bekannten Fahrzeugleuchte ist, dass der Rückstrahler als passives Element wenig funktionell ist. Er bleibt zur aktiven Signalbilderzeugung weitgehend ungenutzt. Weiterhin kann der Rückstrahler bei nur einen flächigen Eindruck erzeugen und ist daher wenig designwirksam.

Aufgabe der vorliegenden Erfindung ist es daher, die Abschirmung der Lichtquellen in den bekannten Fahrzeugleuchten funktioneller zu gestalten und die Leuchten so zu verbessern, dass sie markantere und designwirksamere Signalbilder erzeugen.

Die Aufgabe wird erfindungsgemäß in Verbindung mit dem Oberbegriff des Anspruchs 1 dadurch gelöst, dass die Abschirmeinrichtung als ein, mindestens eine zweite Lichtquelle aufweisendes zweites Lichtsystem ausgebildet ist, und dass die beiden Lichtsysteme mit unterschiedlichen Lichtstärken einstellbar sind.

Dadurch, dass die Fahrzeugleuchte zwei hintereinander angeordnete Lichtsysteme aufweist, können signalwirksame räumliche "Schwebeeffekte" erzielt werden. Das vordere Lichtsystem nimmt eine entsprechend zur Kaschierung der dahinter positionierten Lichtquelle angepasste kleinere Fläche im Vergleich zu dem hinteren Lichtsystem ein, dessen Maße durch den Reflektor bestimmt sind. Die Lichtsysteme sind mit unterschiedlichen Lichtstärken einstellbar. Leuchtet das vordere Lichtsystem heller, scheint es vor dem dunkleren Hintergrund zu schweben. Leuchtet das hintere Lichtsystem heller, scheint es neben dem dunkleren, vorderen Lichtsystem zu schweben. Der Schwebeeffekt verleiht der Leuchte ein markantes Signalbild und zieht die Aufmerksamkeit eines Betrachters, beispielsweise des Fahrers eines nachfolgenden Fahrzeuges, in besonderer Weise auf sich. Weiterhin kann der Schwebeeffekt als besonderes Erkennungsmerkmal einer damit ausgestatteten Fahrzeugmarke dienen. Das vordere Lichtsystem trägt aktiv zu der Erzeugung verschiedener bestimmter Signalbilder bei und ist somit funktioneller als die bisherigen Abschirmeinrichtungen, bzw. Rückstrahler, die lediglich als passive Elemente wirksam sind. Daneben erfüllt das vordere Lichtsystem die Funktion als Abschirmeinrichtung zur Kaschierung der dahinter positionierten, dem Reflektor der Leuchte zugeordneten Lichtquelle.

Gemäß einer bevorzugten Ausführungsform der Erfindung bilden die beiden Lichtsysteme eine Schlussleuchte einer Heckleuchte. Die Anordnung der beiden Lichtsysteme hintereinander ist besonders für die Erzeugung eines markanten, designwirksamen Schlusslichts geeignet. Wenn das vordere Lichtsystem heller als das hintere Lichtsystem leuchtet, wird der Eindruck eines "schwebenden", d.h. im Raum stehenden, Schlusslichts erzeugt. Beide Lichtsystem können unterschiedlich hell abstrahlen. Es ist aber auch möglich, dass nur ein Lichtsystem eingeschaltet wird.

Nach einer weiteren bevorzugten Ausführungsform der Erfindung bilden die beiden Lichtsysteme eine Bremsleuchte einer Heckleuchte. Durch die beiden Lichtsysteme kann auf einfache Weise eine Bremsstärkeanzeige realisiert werden, die zur einer erhöhten Verkehrssicherheit beiträgt. Dazu kann beispielsweise das vordere Lichtsystem bei einem normalen Bremsvorgang mit einer Bremslichtstärke als ein "schwebendes Bremslicht" aufleuchten. Bei einer Notbremsung kann das hintere Lichtsystem besonders signalwirksam für den nachfolgenden Verkehr hinzugeschaltet werden. Dies trägt zur Erhöhung der Verkehrssicherheit im Straßenverkehr bei.

Besonders effektiv ist der Einsatz der beiden Lichtsysteme als kombinierte Schluss-/Bremsleuchte. Bei eingeschalteter Beleuchtung kann dann bei einem Bremsvorgang die Schlusslichtstärke auf Bremslichtstärke angehoben werden, so dass im Falle eines normalen Bremsvorgangs aus dem "schwebenden Schlusslicht" ein "schwebendes Bremslicht" wird, und im Falle einer stärkeren Bremsung, etwa einer Notbremsung, eine ostensible Flächenvergrößerung des Bremslichts hinzukommt.

Gemäß einer weiteren bevorzugten Ausführungsform der Erfindung sind die Lichtquellen beider Lichtsysteme jeweils als eine Mehrzahl roter Leuchtdioden ausgebildet; die Leuchtdioden des ersten Lichtsystems sind auf der der Abdeckscheibe zugewandten Vorderseite einer im Wesentlichen die Abschirmeinrichtung bildenden Trägerplatte angeordnet, und die Leuchtdioden des zweiten Lichtsystems sind auf der Rückseite der Trägerplatte angeordnet.

Grundsätzlich können beide Lichtsysteme mit allen zur Erfüllung der lichttechnischen Vorschriften geeigneten Lichtquellen ausgebildet sein. Beispielsweise kann das hintere Lichtsystem auf herkömmliche Weise eine Glühlampe aufweisen, die im Brennpunkt eines Reflektors angeordnet ist. Für das vordere Lichtsystem ist aufgrund seiner kompakten Bauweise, für eine Heckleuchte, eine Diodenanordnung aus roten Leuchtdioden, positioniert auf der, vorzugsweise als eine Platine ausgebildeten, Trägerplatte, besonders vorteilhaft. Die Positionierung einer weiteren Diodenanordnung auf der Rückseite der Platine kann die Lichtquelle des hinteren Lichtsystems bilden. Dadurch wird eine besonders kostengünstige und fertigungsfreundliche Schlusslicht/Bremslicht Kombination realisiert.

Nach einer weiteren bevorzugten Ausführungsform der Erfindung weist die Abdeckscheibe in einem dem zweiten Lichtsystem vorgelagerten Zentralbereich eine Optik auf. Die klare Abdeckscheibe kann farblos oder farbig, beispielsweise rot ausgebildet sein. Die Optik, beispielsweise in Form einer facettenartigen rot eingefärbten Struktur, kann dazu dienen, den direkten Blick auf die dahinter liegende(n) Lichtquelle(n) des vorderen Lichtsystems zu verhindern, um ein ansprechendes Erscheinungsbild der Leuchte zu erhalten. Die Optik, beispielsweise in Form einer Linse, kann auch dazu dienen, den Effekt des "schwebenden Schlusslichts" noch weiter zu verstärken und/oder eine bestimmte Lichtverteilung zu erzielen. Es ist auch möglich, auf die Optik zu verzichten und den Zentralbereich lediglich einzufärben. Grundsätzlich kann bei einem ansprechendem Design auch gänzlich auf eine Kaschierung der vorderen Lichtquellen verzichtet werden.

Die bekannten Verfahren zur Anzeige unterschiedlicher Signalbilder einer Fahrzeugleuchte haben den Nachteil, dass sie in ihrer Signalwirkung relativ ineffektiv sind.

Weitere Aufgabe der Erfindung ist es daher, die bekannten Verfahren zur Anzeige unterschiedlicher Signalbilder einer Fahrzeugleuchte so zu verbessern, dass sie in ihrer Signalwirkung effektiver sind.

Diese Aufgabe wird erfindungsgemäß in Verbindung mit dem Oberbegriff des Anspruchs 9 dadurch gelöst, dass zwei hintereinander positionierte Lichtsysteme, deren abstrahlende Flächen sich teilweise verdecken, getrennt mit veränderlichen Lichtstärken angesteuert werden.

Dadurch, dass die zwei hintereinander positionierten Lichtsysteme mit unterschiedlichen Lichtstärken angesteuert werden, können design- und signalwirksame visuelle Schwebeeffekte erzielt werden. Die Signalbilder der Leuchte werden durch das Verfahren besser auf eine jeweilige Fahrbetriebssituation angepasst und damit effektiver eingesetzt.

Gemäß einer bevorzugten Ausführungsform der Erfindung wird das erste Lichtsystem zusammen mit dem, dem ersten Lichtsystem vorgelagerten zweiten Lichtsystem, in einer ersten Funktion als eine Schlussleuchte und in einer zweiten Funktion als eine Bremsleuchte angesteuert derart, dass in der Funktion als Schlussleuchte das zweite, vordere Lichtsystem heller leuchtet als das erste, hintere Lichtsystem, und dass in der Funktion als Bremsleuchte bei einer Bremsbetätigung in einer ersten Bremsstufe das vordere Lichtsystem auf eine im Vergleich zu der Schlusslichtstärke größere Bremslichtstärke geschaltet wird, und dass bei einer zweiten Bremsstufe mit einer im Vergleich zu der ersten Bremsstufe wesentlich größeren Bremsstärke zusätzlich zu dem vorderen Lichtsystem das hintere Lichtsystem auf die Bremslichtstärke geschaltet wird.

Durch die Ansteuerung der beiden Lichtsysteme in einer Schluss- und Bremsleuchte mit unterschiedlichen Lichtstärken wird ein Schwebeeffekt erzeugt, der insbesondere die Signalwirkung der Leuchte für den nachfolgenden Verkehr erhöht. Das hellere vordere Licht scheint vor dem dunkleren hinteren Licht zu schweben. Bei einer normalen Bremssuchung, d.h. der ersten Bremsstufe, wird die Lichtstärke des vorderen Lichtsystems auf Bremslichtstärke geschaltet. Bei einer verstärkten Bremsung, entsprechend der zweiten Bremsstufe (Notbremsung) wird zusätzlich zu dem vorderen Lichtsystem, das hintere Lichtsystem auf Bremslichtstärke geschaltet. Die dadurch erzeugte Flächenvergrößerung des Bremslichts interpretiert der nachfolgende Fahrer als eine plötzliche optische Annäherung. Diese, im Unterbewusstsein vorhandene Information, führt automatisch, d.h. ohne dass ein Lernprozess nötig ist, zu einer verstärkten Bremsreaktion. Grundsätzlich sind auch Zwischenstufen denkbar, bei denen die Bremslichtstärken der beiden Lichtsysteme unterschiedlich sind, so das neben dem Vergrößerungseffekt der beleuchteten Fläche auch die Lichtintensität des Bremslichts variiert. Der Effekt des schwebenden Schusslichts bzw. des schwebenden Bremslichts wird damit auf einfache und kostengünstige Weise mit der Bremsstärkeanzeige verbunden. Dabei wird die als zusätzliches Lichtsystem ausgebildete Abschirmeinrichtung effektiv in die Signalbilderzeugung einbezogen und die Signalwirkung der Leuchte insgesamt verbessert.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.
Es zeigen
- Figur 1:: Eine Seitenansicht einer Fahrzeugleuchte im Schnitt mit einem ersten, hinteren Lichtsystem und einem zweiten, vorderen Lichtsystem und
- Figur 2:: die Fahrzeugleuchte von Figur 1 mit einer zweiten Ausführungsform des hinteren Lichtsystems.

Eine Fahrzeugleuchte besteht im Wesentlichen aus einem Reflektor 3, einer ersten Lichtquelle 6, 6', einer zweiten Lichtquelle 5 und einer Abdeckscheibe 1.

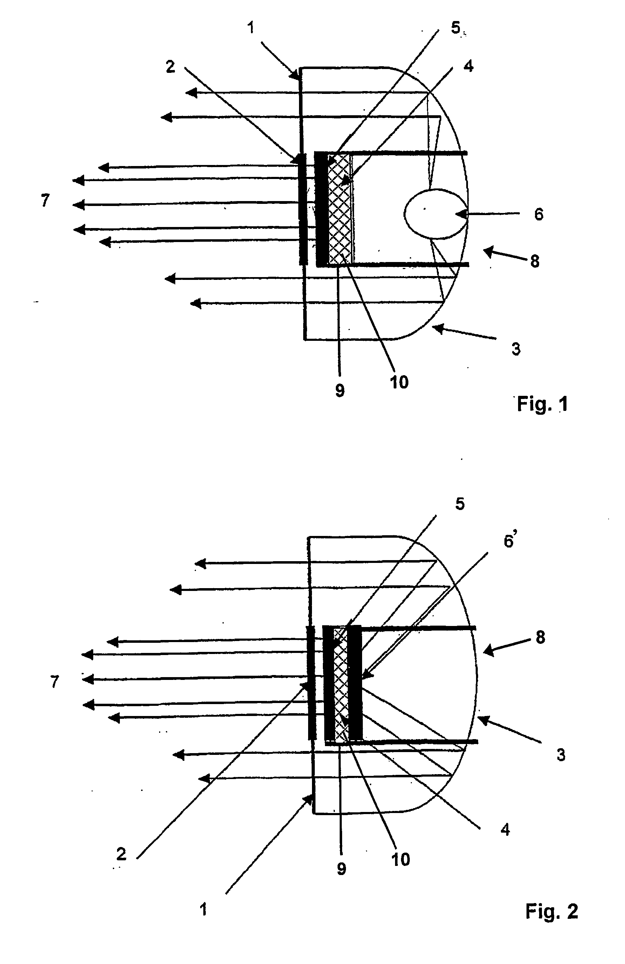

Die in Fig. 1 dargestellte Fahrzeugleuchte ist als eine Heckleuchte mit einer kombinierten Schlussleuchte/Bremsleuchte ausgebildet. Die Komponenten der Heckleuchte sind in einem (nicht dargestellten) Leuchtengehäuse angeordnet, wobei der Reflektor 3 in Abstrahlrichtung 7 von der Abdeckscheibe 1 abgedeckt wird. Die Abdeckscheibe 1 ist als glasklare Scheibe ausgebildet. Dem Reflektor 3 ist eine Lichtquelle 6 zugeordnet, mit der er zusammen ein erstes Lichtsystem 8 bildet. Die Lichtquelle 6 ist als eine rotgefärbte Glühlampe ausgebildet, die im Brennpunkt des Reflektors 3 angeordnet ist. Der Reflektor 3 dient als gemeinsamer Schluss- Bremslichtreflektor. Dem ersten Lichtsystem 8 ist in Richtung der Abdeckscheibe 1 ein zweites Lichtsystem 4 vorgelagert. Das Lichtsystem 4 weist die Lichtquellen 5 auf. Die Lichtquellen 5 sind als ein, aus roten Leuchtdioden (LED) aufgebautes, kreisrundes Diodenarray ausgebildet, das auf einer als eine Platine ausgebildeten Trägerplatte 10 angeordnet ist. Das Lichtsystem 4 ist auf an sich bekannte Weise mit einer, als eine Ringhalterung ausgebildeten, Halterung 9 an dem Reflektor 3 derart befestigt, dass die von der Lichtquelle 6 ausgehende Strahlung ungehindert auf den Reflektor 3 auftreffen und der von dort ausgehende Lichtstrom in Abstrahlrichtung 7 abgestrahlt werden kann. Die Befestigung des Lichtsystems 4 kann auch an einer hinter dem Reflektor 3 liegenden Befestigungsvorrichtung realisiert sein. Das Lichtsystem 4 kaschiert die dahinterliegende Lichtquelle 6, so dass sie für einen Betrachter von außen durch die Abdeckscheibe 1 nicht sichtbar ist. Die Abdeckscheibe 1 weist in einem Zentralbereich 2 eine kreisförmige Optik mit etwa dem Durchmesser des dahinter sitzenden Diodenarrays 5 auf.

Bei der in Fig. 2 gezeigten Ausführungsform ist anstelle der Lichtquelle 6, die Lichtquelle 6' vorgesehen. Die Lichtquelle 6' besteht aus einem, dem Diodenarray 5 ähnlichen weiteren Diodenarray, das auf der Rückseite der Trägerplatte 10 des Lichtsystems 4 angeordnet ist. Das Diodenarray 6' an der Rückseite der Trägerplatte 10 ist etwa im Brennpunkt des Reflektors 3 positioniert. Das Diodenarray 6' strahlt in Richtung der Reflektoroberfläche ab, von wo das reflektierte Licht wiederum in die Abstrahlrichtung 7 abgestrahlt wird.

Ein Verfahren zur Anzeige unterschiedlicher Signalbilder einer Fahrzeugleuchte beruht im Wesentlichen auf der getrennten Ansteuerung zweier hintereinander positionierten Lichtsysteme 4, 8 einer kombinierten Schluss-/Bremsleuchte.

Die in Fig.1 und Fig. 2 dargestellte Heckleuchte wird mit dem Verfahren zur Erzeugung unterschiedlicher Signalbilder eingesetzt. Zur Erzeugung eines "schwebenden Schlusslichts" wird das vordere Lichtsystem 4 mit einer größeren Lichtstärke als das hinter Lichtsystem 8 angesteuert. Dies führt für den Betrachter zu dem Signalbild einer hellen kreisrunde Scheibe, die vor einer im Hintergrund positionierten, weniger hell leuchtenden größeren Scheibe scheinbar im Raum steht.

In einer zweiten Funktion werden die beiden Lichtsysteme 4, 8 als eine Bremsstärkeanzeige eingesetzt. Bei einer normalen Bremssuchung (Bremsstufe 1), d.h. bei einer im Fahrbetrieb üblichen Betätigung des Bremspedals mit durchschnittlicher Stärke, wird das vordere Lichtsystem 4 mit einer Bremslichtstärke angesteuert. Ist das Schlusslicht eingeschaltet, wird die Schlusslichtstärke auf die größere Bremslichtstärke angehoben. Dadurch entsteht das Bild eines "schwebenden Bremslichts". Bei einer wesentlich stärkeren Bremsbetätigung (Bremsstufe 2) wird das hintere Lichtsystem 8 hinzugeschaltet. Dadurch vergrößert sich die aufleuchtende Fläche signifikant, indem sich die durch die Abdeckscheibe 1 abstrahlenden Flächen beider Lichtsystem 4, 8 addieren. Es erscheint somit ein Signalbild, dass sich von dem einer normalen Bremssuchung derart unterscheidet, dass dem nachfolgenden Verkehr eine plötzliche Annäherung signalisiert wird, die zu einer automatischen, unmittelbaren Bremsreaktion oder zumindest zu einer erhöhten Bremsbereitschaft und Verlangsamung des nachfolgenden Verkehrs führt.

## Patentansprüche

1. Fahrzeugleuchte,
bei der ein Reflektor (3) mit mindestens einer dem Reflektor zugeordneten ersten Lichtquell (6) ein erstes Lichtsystem (8) bildet, dessen Lichtstrom auf eine lichtdurchlässige Abdeckscheibe (1) leitbar ist, und mit einer der Lichtquelle zur Abdeckscheibe hin vorgelagerten Abschirmeinrichtung,
bei der die Abschirmeinrichtung als ein, mindestens eine zweite Lichtquelle (5) aufweisendes zweites, vorderes Lichtsystem (4) ausgebildet ist, **dadurch gekennzeichnet, dass** die beiden Lichtsysteme (4, 8) mit unterschiedlichen Lichtstärken einstellbar sind,
die beiden Lichtsysteme (4, 8) eine Schlussleuchte einer Heckleuchte bilden, und
die beiden Lichtsysteme (4, 8) eine Bremsleuchte einer Heckleuchte bilden.

2. Fahrzeugleuchte nach Anspruch 1, **dadurch gekennzeichnet, dass** die Größe der aufleuchtende Fläche der Bremsleuchte bei einer Bremsbetätigung in Abhängigkeit von der Bremsstärke mittels der beiden Lichtsysteme (4, 8) variierbar ist.

3. Fahrzeugleuchte nach Anspruch 1 oder 2, **dadurch gekennzeichnet, dass** die jeweiligen Lichtstärken der beiden Lichtsysteme (4, 8) bei einer Bremsbetätigung, in Abhängigkeit von der Bremsstärke, auf eine im Vergleich zu einer jeweiligen Schlusslichtstärke größere Bremslichtstärke schaltbar sind.

4. Fahrzeugleuchte nach einem der Ansprüche 1 bis 3, **dadurch gekennzeichnet, dass** die Lichtquelle (5, 6, 6') mindestens eines Lichtsystems (4, 8) als mindestens eine Glühlampe oder als mindestens eine Leuchtdiode ausgebildet ist.

5. Fahrzeugleuchte nach einem der Ansprüche 1 bis 4, **dadurch gekennzeichnet, dass** die Lichtquellen (5, 6') beider Lichtsysteme (4, 8) jeweils als eine Mehrzahl roter Leuchtdioden ausgebildet sind, und dass die Leuchtdioden (5) des vorderen Lichtsystems (4) auf der der Abdeckscheibe (1) zugewandten Vorderseite einer im Wesentlichen die Abschirmeinrichtung bildenden Trägerplatte (10) angeordnet sind, und dass die Leuchtdioden (6') des hinteren Lichtsystems (8) auf der Rückseite der Trägerplatte (10) angeordnet sind.

6. Fahrzeugleuchte nach einem der Ansprüche 1 bis 5, **dadurch gekennzeichnet, dass** die Abdeckscheibe (1) in einem, dem zweiten Lichtsystem (4) vorgelagerten, Zentralbereich (2) eine Optik aufweist.

7. Verfahren zur Anzeige unterschiedlicher Signalbilder einer Fahrzeugleuchte, bei dem zwei hintereinander positionierte Lichtsysteme (4, 8), deren abstrahlende Flächen sich teilweise verdecken, getrennt mit veränderlichen Lichtstärken angesteuert werden, **dadurch gekennzeichnet, dass** das erste Lichtsystem (8) zusammen mit dem, dem ersten Lichtsystem (8) vorgelagerten zweiten Lichtsystem (4), in einer ersten Funktion als eine Schlussleuchte und in einer zweiten Funktion als eine Bremsleuchte angesteuert wird derart, dass in der Funktion als Schlussleuchte das zweite, vordere Lichtsystem (4) heller leuchtet als das erste, hintere Lichtsystem (8), und dass in der Funktion als Bremsleuchte bei einer Bremsbetätigung in einer ersten Bremsstufe das vordere Lichtsystem (4) auf eine im Vergleich zu der Schlusslichtstärke größere Bremslichtstärke geschaltet wird, und dass bei einer zweiten Bremsstufe mit einer im Vergleich zu der ersten Bremsstufe wesentlich größeren Bremsstärke zusätzlich zu dem vorderen Lichtsystem (4) das hintere Lichtsystem (8) auf die Bremslichtstärke geschaltet wird.

## Claims

1. A vehicle light, in which a reflector (3) with at least one first light source (6) associated with the reflector forms a first light system (8), the light flow of which can be guided onto a translucent cover pane (1), and comprising a screening device situated in front of the light source toward the cover pane, in which the screening device is configured as a second, forward light system (4) having at least one second light source (5), **characterised in that** the two light systems (4, 8) are adjustable with different light intensities, the two light systems (4, 8) form a tail light of a rear light, and the two light systems (4, 8) form a brake light of a rear light.

2. A vehicle light according to claim 1, **characterised in that** the size of the flashing surface of the brake light during a braking operation can be varied as a function of the braking intensity by means of the two light systems (4, 8).

3. A vehicle light according to claim 1 or 2, **characterised in that** the respective light intensities of the two light systems (4, 8) during a braking operation, can be switched to a brake light intensity which is greater in comparison to a respective tail light intensity.

4. A vehicle light according to any one of claims 1 to 3, **characterised in that** the light source (5, 6, 6') of at least one light system (4, 8) is configured as at least one incandescent lamp or as at least one light-emitting diode.

5. A vehicle light according to any one of claims 1 to 4, **characterised in that** the light sources (5, 6') of the two light systems (4, 8) are in each case configured as a plurality of red light-emitting diodes, and **in that** the light-emitting diodes (5) of the forward light system (4) are arranged on the forward side facing the cover pane (1) of a carrier plate (10) substantially forming the screening device, and **in that** the light-emitting diodes (6') of the rearward light system (8) are arranged on the rear of the carrier plate (10).

6. A vehicle light according to any one of claims 1 to 5, **characterised in that** the cover pane (1) has a lens system in a central region (2) situated in front of the second light system (4).

7. A method for displaying different signal patterns of a vehicle light, in which two light systems (4, 8) positioned behind one another, the emitting surfaces of which partially overlap, are controlled separately with variable light intensities, **characterised in that** the first light system (8) is controlled together with the second light system (4) situated in front of the first light system (8), in a first function, as a tail light and, in a second function, as a brake light in such a way that in the function as a tail light, the second forward light system (4) shines brighter than the first rearward light system (8), and **in that** in the function as a brake light, during a braking operation in a first braking stage, the forward light system (4) is switched to a brake light intensity which is greater in comparison to the tail light intensity, and **in that** in a second braking stage with a substantially greater braking intensity in comparison to the first braking stage, in addition to the forward light system (4), the rearward light system (8) is switched to the brake light intensity.

## Revendications

1. Projecteur de véhicule comprenant un réflecteur (3) formant avec au moins une première source lumineuse (6) associée, un premier système de projection (8) dont le flux lumineux passe dans un verre de couverture (1) transparent et une installation d'écran en amont de la source lumineuse du côté du verre de couverture, et
l'installation formant écran constitue un second système de projection, avant (4) ayant au moins une seconde source lumineuse (5),
**caractérisé en ce que**
les deux systèmes de projection (4, 8) sont réglables avec des intensités lumineuses différentes,
les deux systèmes de projection (4, 8) forment un feu arrière d'un projecteur arrière, et
les deux systèmes de projection (4, 8) forment un feu de frein d'un projecteur arrière.

2. Projecteur de véhicule selon la revendication 1,
**caractérisé en ce que**
la dimension de la surface éclairée du projecteur de frein en cas d'actionnement du frein est variable en fonction de l'intensité de freinage à l'aide des deux systèmes de projection (4, 8).

3. Projecteur de véhicule selon l'une des revendications 1 ou 2,
**caractérisé en ce que**
l'intensité d'éclairage respective des deux systèmes d'éclairage (4, 8) peut être commutée pour une manoeuvre de frein en fonction de l'intensité du freinage sur une intensité de feu de frein plus grande par comparaison avec l'intensité de feu arrière respective.

4. Projecteur de véhicule selon l'une des revendications 1 à 3,
**caractérisé en ce que**
la source lumineuse (5, 6, 6') des deux systèmes de projection (4, 8) est réalisée au moins par une lampe à incandescence ou au moins une diode électroluminescente.

5. Projecteur de véhicule selon l'une des revendications 1 à 4,
**caractérisé en ce que**
les sources lumineuses (5, 6') des deux systèmes de projection (4, 8) sont réalisées chacune par un ensemble de photodiodes rouges,
des photodiodes (5) du système de projection avant (4) sont prévues sur la face avant tournée vers le verre de couverture (1) d'une plaque de support (10) formant pratiquement l'installation de cache, et
les photodiodes (6') du système de projection arrière (8) sont prévues au dos de la plaque de support (10).

6. Projecteur de véhicule selon l'une des revendications 1 à 5,
**caractérisé en ce que**
le verre de couverture (1) comporte dans sa zone centrale (2) une optique en amont du second système de projection (4).

7. Procédé pour afficher des images de signaux différentes d'un feu de véhicule selon lequel deux systèmes de projection (4, 8) sont placés l'un derrière l'autre, leur surface d'émission se couvrant partiellement, ces systèmes étant commandés avec des intensités lumineuses variables,
**caractérisé en ce que**
le premier système de projection (8) avec le second système de projection (4) en amont du premier système de projection (8) sont commandés dans une première fonction comme feu arrière et dans une seconde fonction comme feu de frein de façon que dans la fonction de feu arrière, le second système de projection avant (4) soit éclairé plus fortement que le premier système de projection arrière (8) et que dans la fonction de feu de frein, lors de l'actionnement du frein dans un premier niveau de freinage, le système de projection avant (4) soit commuté sur une intensité de feu de frein plus importante par comparaison avec l'intensité du feu arrière, et
pour un second niveau de freinage avec une intensité de freinage beaucoup plus importante que celle du premier niveau, outre le système de projection avant (4), le système de projection arrière (8) est branché sur l'intensité d'un feu de frein.
